# DEMANDE DE BREVET EUROPEEN

(11) **EP 0 933 433 A1**
(43) Date de publication de la demande: **04.08.1999**
(21) Numéro de dépôt: 98200242.0
(22) Date de dépôt: 28.01.1998
(51) Int. Cl.: C21B 13/10

(54) **Procédé de réduction d'oxydes de fer et installation à cet effet**

(71) Demandeur: SIDMAR N.V., B-9042 Gent (BE)
(72) Inventeur: Monteyne, Guido, 9971 Lembeke (BE)
(74) Mandataire: Van Malderen, Michel

(57) **Abrégé**

Procédé amélioré de réduction directe d'oxydes de fer dans un four continu, de préférence un four à sole tournante, caractérisé en ce que l'on dépose sur la sole, de préférence chauffée à une température supérieure à 800 °C, une première couche légèrement préchauffée de charbon, de préférence du charbon à forte teneur en constituants volatils, et en ce qu'on recouvre cette couche par une couche préchauffée d'oxydes de fer à une température de l'ordre de 800 °C afin de faire débuter immédiatement la réduction des oxydes de fer sous l'effet du passage forcé des constituants volatils libérés par l'apport de chaleur de la sole chauffée et de la couche d'oxyde de fer préchauffée à l'interface, en particulier de l'hydrogène, et en ce que, par le biais d'équipements grâce auxquels la couche supérieure d'oxydes de fer est mélangée à la couche de charbon, progressivement à des niveaux de plus en plus bas, au fur et à mesure de la rotation de la sole, on homogénéise la charge et on étend la réduction progressivement à la masse de la charge, et en ce qu'on réalise un plus grand transfert thermique de par une augmentation de la surface à l'interface avec l'atmosphère du four et de par la suppression du brouillard goudronneux au-dessus de la surface supérieure de la charge.

## Description

### Objet de l'invention

La présente invention concerne un procédé amélioré de réduction directe d'oxydes de fer par du charbon, qui permet d'obtenir une productivité accrue et une consommation spécifique de charbon réduite. Elle concerne également une installation à cet effet et l'éponge de fer pouvant être produite.

### Buts de l'invention

L'invention vise d'une part à utiliser de manière plus efficace les capacités réductives des constituants volatils du charbon par leur passage forcé dans la couche d'oxydes de fer préchauffée, et d'autre part a augmenter les vitesses de réaction par un mélange de la charge, par une augmentation de l'efficacité du rayonnement du four et par une augmentation de la surface d'échange thermique avec l'atmosphère du four. Conjointement, ces conditions opératoires devraient également conduire à une réduction de la production de dioxyde de carbone rejeté dans l'atmosphère par quantité unitaire d'oxydes de fer réduit obtenue.

L'invention a également pour objet de produire une éponge de fer présentant une meilleure homogénéité du degré de réduction dans la masse par rapport aux produits résultant des techniques connues.

### Arrière-plan technologique à la base de l'invention et état de la technique

La réduction directe d'oxydes de fer, notamment des minerais mais également de différents oxydes de fer recyclés, s'est largement développée ces dernières années.

Dans le document EP 0 692 543 A1, on décrit un procédé pour fabriquer une éponge de fer à basse teneur en soufre.

Dans ce document, on indique qu'on dispose sur une sole mobile, une charge non préchauffée composée de couches superposées de matières finement divisées, au moins une de ces couches étant constituée essentiellement d'oxydes de fer et au moins une autre couche étant formée par un mélange d'un agent réducteur carboné solide et d'un agent désulfurant. La réduction des oxydes de fer est principalement réalisée au moyen du monoxyde de carbone en provenance du charbon, les constituants volatils du charbon ne participant que partiellement à la réduction des oxydes de fer.

De même, dans la production d'éponges de fer à partir de pellets formés d'un mélange d'oxydes de fer et de charbon, on effectue la réduction des oxydes de fer principalement au moyen du monoxyde de carbone en provenance du charbon, les constituants volatils du charbon ne prenant que partiellement part au processus de réduction.

### Eléments caractéristiques de l'invention

L'invention porte sur un procédé amélioré de réduction directe d'oxydes de fer dans un four continu, de préférence un four à sole tournante, de préférence avec une sole chauffée à une température supérieure à 800 °C réalisant un chauffage rapide de la couche de charbon en contact avec ladite sole et provoquant de ce fait un dégagement rapide des constituants volatils du charbon, caractérisé en ce que l'on dépose sur la sole une première couche de charbon, de préférence du charbon à forte teneur en constituants volatils et préchauffé à une température proche du dégagement des constituants volatils (soit de l'ordre de 200 °C), et en ce que l'on recouvre cette couche par une couche préchauffée d'oxydes de fer à une température évitant le grossissement exagéré des particules mais suffisante pour permettre une réduction efficace des oxydes de fer (soit de l'ordre de 800 °C), afin de porter rapidement la couche de charbon proche de l'interface charbon/oxyde de fer à une température de dégagement des constituants volatils et sous l'effet des constituants volatils ainsi libérés, en particulier de l'hydrogène, de réaliser la réduction des oxydes de fer, le four étant pourvu d'équipements grâce auxquels la couche de charbon est mélangée progressivement à des niveaux de plus en plus bas dans la couche d'oxydes de fer, à mesure de la rotation de la sole.

La description qui suit fera référence au terme général d'oxydes de fer. Ce terme englobe aussi bien les minerais de fer habituels que les oxydes de fer de récupération provenant des processus sidérurgiques, qu'un mélange de ces sources d'oxydes de fer avec des fines de coke ou avec du charbon préalablement libéré de ses constituants volatils, dans ce cas la quantité de charbon mélangée est inférieure à celle provoquant une adhérence du mélange.

On entend par charbon toute matière carbonée à l'état solide.

Les conditions opératoires sont choisies de manière à réaliser un compromis entre, d'une part, la nécessité de réaliser aussi vite que possible une température élevée et homogène du mélange du charbon et des oxydes de fer, et d'autre part la nécessité de ne mettre progressivement en contact avec la couche d'oxydes de fer chauds que la partie supérieure de la couche de charbon en évitant d'y incorporer des couches inférieures plus froides.

D'autre part, pour ce qui concerne la couche supérieure de la charge, il faut éviter que celle-ci ne se vitrifie, par exemple par formation de silicates du type fayalite qui ont un effet d'inhibition de la réduction.

Le but final est bien entendu d'obtenir en un temps d'élaboration aussi court que possible, le temps d'élaboration étant déterminé par le point le plus froid de la charge, une éponge de fer présentant de meilleures caractéristiques d'homogénéité comparée aux éponges produites par les techniques de réduction de l'état de la technique, ces dernières présentant généralement l'inconvénient d'entraîner la production d'un produit avec des taux de réduction des oxydes de fer variables.

L'invention repose sur l'observation que, dans le procédé de l'état de la technique, une grande partie des constituants volatils du charbon, en particulier l'hydrogène et le méthane, ne sont pas mis en oeuvre pour leur capacité réductive, cette réduction étant en fait opérée principalement par de l'oxyde de carbone dont les cinétiques de réduction sont nettement moins favorables que celles de l'hydrogène. Il est donc apparu qu'il serait particulièrement avantageux que les constituants volatils précités soient progressivement libérés et, de par leur passage forcé au travers de la couche d'oxydes de fer, mis en contact avec les oxydes de fer dans des conditions opératoires, en particulier la température des oxydes de fer et les mélanges successifs des réactifs, telles qu'ils participent à la réduction de ceux-ci. Ceci implique que l'oxyde de fer et le charbon soient mis en contact à des températures aussi élevées que possible, sans cependant perturber le déroulement du processus de réduction.

Il est apparu avantageux de mélanger de la chaux aux oxydes de fer, celle-ci évitant des phénomènes d'adhérence des éponges de fer. De plus, la chaux contribue généralement à la désulfurisation et à la formation, lors du traitement ultérieur des éponges de fer, d'un laitier ou de scories permettant notamment d'éliminer le soufre sous forme de sulfure.

Avantageusement, l'opération telle que décrite n'implique le dépôt sur la sole que d'une couche de charbon et d'une couche d'oxydes de fer.

L'invention porte également sur une installation constituée par un four à sole tournante comportant un équipement permettant de réaliser le mélange progressif d'une couche d'oxydes de fer et d'une couche sous-jacente de charbon, constitué de préférence sous forme de socs disposés à la manière d'un râteau pénétrant dans la couche d'oxydes de fer et dans la couche sous-jacente de charbon. Ces râteaux sont disposés radialement dans le four et les socs sont disposés à des profondeurs progressivement croissantes à mesure que la matière progresse sous l'effet de la rotation de la sole.

Les socs des râteaux sont, de préférence, décalés, c'est-à-dire disposés en quinconce par rapport aux socs du râteau précédent. Le mouvement de la matière sur la sole provoque un mélange (c'est-à-dire un brassage) et la formation d'un "sillon" par le premier râteau qui est ensuite perturbé lors du contact avec le second râteau.

L'extrémité des socs peut être conformée de manière à provoquer un retournement de la matière afin d'assurer une meilleure homogénéisation. Cette extrémité peut, si l'on souhaite, être refroidie (par une circulation interne d'un liquide réfrigérant par exemple).

La distribution des râteaux dans le four peut se faire de façon linéaire sur la longueur de passage dans le four. Elle se fera de préférence de façon non linéaire et sera dépendante de la température de surface ainsi que du gradient de température dans la charge.

L'épaisseur de la couche de charbon se détermine par la quantité stoechiométrique nécessaire pour provoquer la réduction complète des oxydes de fer présents, majorée d'une quantité pour pallier aux pertes inhérentes à tout procédé et éventuellement majorée d'une quantité nécessaire à la fusion de l'éponge et à l'alliage ultérieur du fer.

Généralement, les extrémités des socs pénètrent dans la couche de charbon progressivement à raison d'environ 2 à 5 mm. En d'autres mots, les extrémités des socs du premier râteau pénètrent de 2 à 5 mm dans la couche de charbon, le second râteau pénètre de 2 à 5 mm supplémentaires, et ainsi de suite jusqu'à l'homogénéisation de la charge.

Les socs des râteaux sont conçus de tel sorte qu'à chaque passage de la charge une partie de celle-ci soit retournée, la couche supérieure de la charge en contact avec l'atmosphère du four, au début constituée d'oxydes de fer ensuite du mélange oxydes de fer/charbon, est descendue tandis que la couche inférieure du mélange et la couche supérieure du charbon sont remontées.

Les sillons créés par les socs des râteaux au passage de la charge, augmentent de l'ordre de 20 % la surface de la charge à l'interface avec l'atmosphère du four, ce qui a pour effet d'augmenter de façon non négligeable le transfert thermique de l'atmosphère du four vers la masse de la charge.

Le mélange progressif de la couche d'oxydes de fer chauds avec la couche sous-jacente de charbon dont la température est nécessairement plus élevée dans la zone proche de l'interface oxydes de fer/charbon que dans les couches de charbon plus éloignées, se traduit par les conséquences suivantes :
- une augmentation de l'efficacité du transfert énergétique de rayonnement du four par la suppression du brouillard goudronneux souvent présent dans l'atmosphère des fours ou une couche de charbon est présente en surface;
- un plus grand transfert thermique de par une augmentation de la surface à l'interface couche supérieure/atmosphère du four;
- la meilleure conductibilité thermique de la couche d'oxydes de fer, présents au début en une seule couche dans la partie supérieure de la charge et par après progressivement dans le mélange, contribue à un meilleur transfert thermique que celui des procédés à couches multiples, sans que l'agent réducteur, en l'occurrence le charbon, qui est moins bon conducteur thermique, ne perturbe ce processus;
- le mélange progressif des couches constituant la charge permet la réalisation rapide d'une homogénéisation de la température de cette charge;
- les oxydes de fer atteignent très rapidement les températures élevées où leur réactivité est plus forte, ce qui augmente l'efficacité du processus de réduction et diminue la durée opératoire;
- les constituants volatils libérés progressivement, générés par le charbon porté progressivement à plus haute température et introduit progressivement dans le mélange, sont utilisés de manière efficace et immédiate comme agent de réduction;
- la réduction à l'aide d'hydrogène se produit immédiatement et est optimalisée, ce qui permet de mettre à profit sa cinétique réactionnelle plus forte que celle du gaz CO;
- la réduction par le CO est rendue plus efficace de par ce que la couche de charbon supérieure, libérée des constituants volatils, est progressivement mélangée à la couche contenant les oxydes de fer;
- la couche de charbon sous-jacente à la couche de charbon mélangée à la couche contenant les oxydes de fer, est chauffée de façon accélérée par l'apport d'énergie thermique de la couche supérieure de la charge retournée par l'action des socs;
- le contact de la partie inférieure de la couche de charbon avec la sole chauffée à plus de 800 °C, provoque une libération rapide des constituants volatils de cette partie de la couche, et, de par son passage forcé au travers de la couche d'oxydes de fer préchauffé, son utilisation immédiate comme agent réducteur;
- les trop hautes températures en surface sont évitées, et de la sorte, il n'y a pas production de fayalite;
- du fait que la charge ne soit formée que de deux couches, la zone de chargement du four est plus compacte et en conséquence, le volume disponible pour la réduction plus important;
- le four, pour une production identique, sera moins volumineux que celui des autres procédés par exemple ceux travaillant avec une charge à multiple couches.

En principe, l'agent réducteur est du charbon avec une teneur élevée en constituants volatils, de préférence avec une teneur supérieure à 30% en constituants volatils.

Le four est généralement maintenu à une température de coupole de l'ordre de 1300 à 1450 °C, de préférence de l'ordre de 1400 °C, par exemple par des brûleurs installés dans la voûte du four à sole mobile.

Le mélange de l'agent réducteur avec l'oxyde de fer a pour conséquence, compte tenu de la température d'alimentation de l'oxyde de fer de l'ordre de 800 °C, que la température maximale atteinte ne dépasse pas 1100 à 1200 °C en surface.

Le procédé décrit présente l'avantage que, par rapport à d'autres techniques comparables basées sur une réduction ou une préréduction directe à l'aide de charbon, l'utilisation maximale des propriétés réductives pour la réduction de l'oxyde de fer, d'une part de par l'hydrogène libéré par les constituants volatils et d'autre part de par la plus grande vitesse de réaction du CO résultant de l'homogénéisation de la charge, diminue fortement la consommation énergétique par tonne de fer réduit. L'utilisation de l'hydrogène comme agent réducteur ainsi que l'homogénéisation de la température contribuent à un meilleur déroulement opératoire, en particulier un déroulement opératoire plus rapide et plus efficace, un encombrement plus réduit du four et une optimalisation des échanges thermiques. En principe, il devient possible de produire moins de dioxyde de carbone par masse unitaire de fer réduit produit.

### Description d'une forme d'exécution préférée de l'invention

L'invention sera décrite en référence à une forme d'exécution préférée de l'invention illustrée dans les dessins annexés.
- La figure 1: représente le schéma opératoire de l'invention.
- La figure 2: représente la position des socs dans la charge.
- La figure 3: représente les sillons résultant du passage des socs dans la charge.
- La figure 4: représente schématiquement une distribution des râteaux dans un four rotatif.

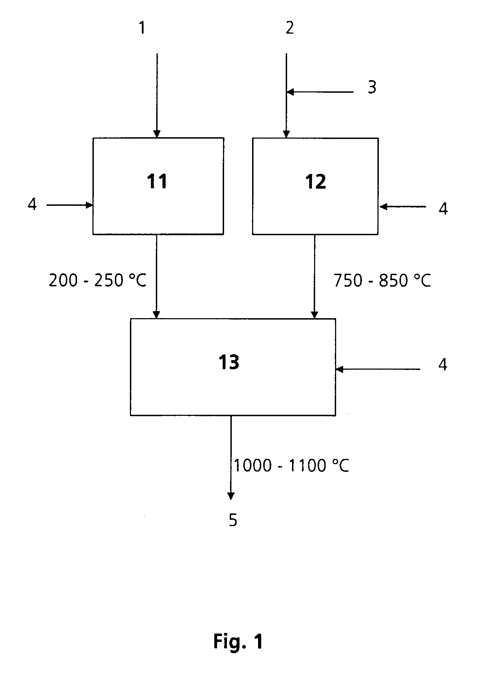

Le principe de fonctionnement du procédé est illustré à la figure 1.

Le repère 1 représente l'alimentation principale en charbon et le repère 2 l'alimentation en oxydes de fer.

Le charbon 1 et les oxydes de fer 2 parviennent respectivement dans une installation de préchauffage 11 du charbon et de préchauffage 12 des oxydes de fer.

L'apport éventuel d'adjuvants est illustré par le repère 3, le repère 4 illustrant l'apport thermique.

Les charges préchauffées préférentiellement aux températures indiquées de 200-250 °C pour le charbon et 750-850 °C pour les oxydes de fer, parviennent dans une unité de réduction ou de préréduction 13 recevant un apport thermique 4, de manière à produire une éponge de fer qui est évacuée en 5.

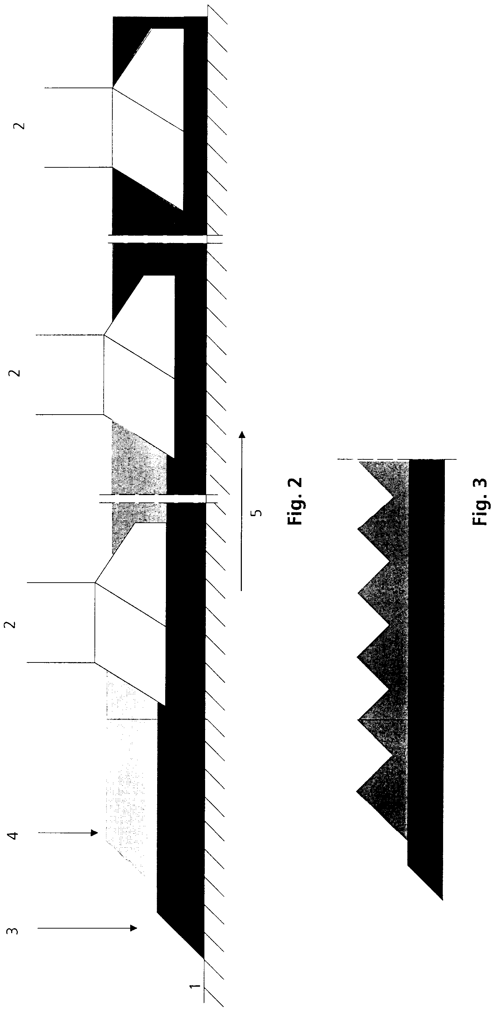

Dans la figure 2, on indique par le repère 1 la sole du four, un soc de râteau de mélange portant le repère 2. Le mouvement rotatif de la sole vis-à-vis des râteaux est illustré par la flèche 5.

Les repères 3 et 4 illustrent respectivement la charge de charbon sur la sole et la charge d'oxydes de fer recouvrant celle-ci.

On notera que trois râteaux de mélange sont représentés chaque fois par un soc, ceux-ci pénétrant de plus en plus profondément dans la charge de charbon de la gauche vers la droite.

La figure 3 illustre la forme des sillons qui sont résultant du passage des socs dans la charge.

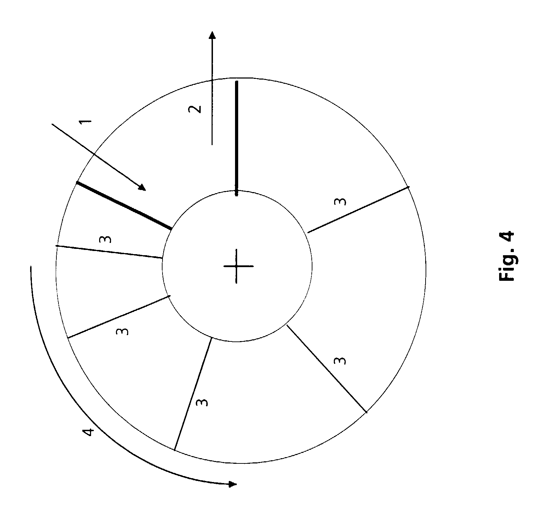

Dans la figure 4, on illustre en 1 la zone de chargement et en 2 la zone d'évacuation de la sole tournante, celle-ci effectuant un mouvement dans le sens anti-horlogique représenté par la flèche 4. Les râteaux supportant les socs ont reçu le repère de référence 3.

## Revendications

1. Procédé amélioré de réduction directe d'oxydes de fer dans un four continu, de préférence un four à sole tournante, caractérisé en ce que l'on dépose sur la sole, de préférence chauffée à une température supérieure à 800 °C, une première couche légèrement préchauffée de charbon, de préférence du charbon à forte teneur en constituants volatils, et en ce qu'on recouvre cette couche par une couche préchauffée d'oxydes de fer à une température de l'ordre de 800 °C afin de faire débuter immédiatement la réduction des oxydes de fer sous l'effet du passage forcé des constituants volatils libérés par l'apport de chaleur de la sole chauffée et de la couche d'oxyde de fer préchauffée à l'interface, en particulier de l'hydrogène, et en ce que, par le biais d'équipements grâce auxquels la couche supérieure d'oxydes de fer est mélangée à la couche de charbon, progressivement à des niveaux de plus en plus bas au fur et à mesure de la rotation de la sole, on homogénéise la charge et on étend la réduction progressivement à la masse de la charge.

2. Procédé selon la revendication 1, caractérisé en ce que l'on met en oeuvre les oxydes de fer à une température d'alimentation aussi élevée que possible tout en évitant, par l'action de râteaux distribués de façon judicieuse, la formation de composés tels que la fayalite qui seraient préjudiciables à la réduction.

3. Procédé selon la revendication 1 ou 2, caractérisé en ce que l'on réalise ledit contact à une température aussi élevée que possible sans provoquer un refroidissement important de la zone de mélange par suite de l'apport dans cette zone, de charbon à plus basse température et possédant encore, dans les premiers temps, leurs constituants volatils.

4. Procédé selon l'une quelconque des revendications 1 à 3, caractérisé en ce que l'on met en oeuvre le charbon à l'état préchauffé à une température aussi élevée que possible sans dépasser une valeur de l'ordre de 250 °C.

5. Procédé selon l'une quelconque des revendications 1 à 4, caractérisé en ce que les oxydes de fer mis en oeuvre sont des minerais de fer ou des oxydes de fer recyclés provenant par exemple des hauts fourneaux, des aciéries, des fours électriques et des laminoirs.

6. Procédé selon l'une quelconque des revendications 1 à 5, caractérisé en ce que l'on mélange de la chaux avec le charbon.

7. Procédé selon l'une quelconque des revendications 1 à 6, caractérisé en ce que l'on dépose sur la sole une seule couche de charbon et une seule couche d'oxydes de fer sur la couche de charbon.

8. Installation constituée par un four à sole tournante comportant un équipement permettant de réaliser le mélange progressif d'une couche d'oxydes de fer et d'une couche sous-jacente de charbon, constitué de préférence sous forme de socs disposés à la manière des dents d'un râteau pénétrant dans la couche d'oxydes de fer et dans la couche sous-jacente de charbon, les râteaux étant disposés radialement dans le four et les socs de râteaux successifs étant disposés à des profondeurs progressivement croissantes à mesure que la matière progresse sous l'effet de la rotation de la sole.

9. Installation selon la revendication 8, caractérisée en ce que les socs sont décalés, c'est-à-dire disposés en quinconce par rapport aux socs du râteau précédent et aux socs du râteau suivant.

10. Installation selon la revendication 8 ou 9, caractérisée en ce que chacun des socs du râteau agit à la manière d'un soc de charrue, l'extrémité des socs étant de préférence conformée de manière à provoquer, sur la totalité de la surface du four, un retournement de la matière afin d'assurer une meilleure homogénéisation.

11. Installation selon l'une quelconque des revendications 8 à 10, caractérisée en ce que les socs créent sur la surface de la charge des sillons qui augmentent la surface à l'interface avec l'atmosphère du four, réalisant de ce fait un plus grand transfert thermique du four vers la charge.

12. Installation selon l'une quelconque des revendications 10 ou 11, caractérisée en ce que pour une couche d'oxydes de fer déposée, les extrémités des socs pénètrent dans la couche inférieure de charbon progressivement d'un râteau à l'autre à raison d'environ 2 à 5 mm.

13. Installation selon l'une quelconque des revendications 8 à 12, caractérisée en ce que le four est maintenu à une température de coupole de l'ordre de 1300 à 1450 °C, de préférence de l'ordre de 1400 °C, par des brûleurs installés sur les parois de côtés du four à sole mobile.

14. Eponge de fer obtenue par le procédé d'une quelconque des revendications 1 à 7 et/ou à l'aide de l'installation selon l'une quelconque des revendications 8 à 13, caractérisée par une homogénéité des taux de réduction dans la masse, supérieure à celle obtenue par les procédés de l'état de la technique, ainsi que par un temps de réduction court.
